# EUROPÄISCHE PATENTANMELDUNG

(11) **EP 1 837 354 A1**
(43) Veröffentlichungstag der Anmeldung: **26.09.2007**
(21) Anmeldenummer: 07104243.6
(22) Anmeldetag: 15.03.2007
(51) Int. Cl.: C08G 18/12, C09J 163/00

(54) **Dichtstoff auf der Basis von epoxidiertem Polysulfid und Isocyanat**

(30) Priorität: 21.03.2006 DE 102006012973
(71) Anmelder: Fenoplast Fügetechnik GmbH, 35764 Sinn (DE)
(72) Erfinder: Berkember, Harald, 35708, Haiger (DE)
(74) Vertreter: Schwabe - Sandmair - Marx

(57) **Zusammenfassung**

Die vorliegende Erfindung betrifft eine Zusammensetzung auf der Basis von epoxidiertem Polysulfid und Isocyanat und dessen Verwendung als Dichtstoff, Isolierdichtung und insbesondere als Isolierglasversiegelung im Fensterbau. Die Zusammensetzung ist herstellbar durch die Umsetzung a) einer Komponente A, umfassend ein epoxidiertes Polysulfid mit b) einer Komponente B, umfassend ein Isocyanat.

## Beschreibung

Die vorliegende Erfindung betrifft eine Zusammensetzung auf der Basis von epoxidiertem Polysulfid und Isocyanat und dessen Verwendung als Dichtstoff, Isolierdichtung und insbesondere als Isolierglasversiegelung im Fensterbau.

Hintergrund der Erfindung ist ein Dichtstoff, der bei der Herstellung von Isolierglasfenstern Anwendung finden kann. Ein Isolierglasfenster ist eine Anordnung aus zwei oder mehr Glasscheiben, die in einem Rahmen angebracht sind. Zwei Glasscheiben bilden zusammen mit dem Rahmen jeweils einen Scheibenzwischenraum. Der Scheibenzwischenraum ist mit getrockneter Luft oder Edelgas gefüllt, um eine vorteilhafte Wärmedämmung zu ermöglichen. Der Scheibenzwischenraum muss möglichst hermetisch (d.h. gasdicht) von der Umgebung abgetrennt sein, um ein Entweichen des Edelgases bzw. ein Eindringen von Raumluft und Feuchtigkeit zu verhindern. Dies wird mit einer Dichtung erreicht, die bei Isolierglasfenstern oder -türen Isolierglasversiegelung genannt wird. Die Isolierglasversiegelung sorgt für den Kontakt zwischen Rahmen und Glas und wirkt als Dichtung. Für die Isolierglasversiegelung ergeben sich spezielle Anforderungen. Der Dichtstoff der die Isolierglasversiegelung bildet muss folgende Eigenschaften aufweisen:
Der Dichtstoff muss sowohl auf Glas, als auch auf dem Rahmenmaterial (z.B. Aluminium oder Stahl) haften und so die Dichtigkeit also den hermetischen Abschluss herstellen (Haftfähigkeit). Oftmals ist zur Verbesserung der Haftfähigkeit ein Haftvermittler notwendig.

Der Dichtstoff muss möglichst gasundurchlässig sein. Insbesondere darf keine Luft oder Feuchtigkeit in den Scheibenzwischenraum gelangen bzw. Edelgas aus dem Scheibenzwischenraum austreten (Undurchlässigkeit).

Der Dichtstoff darf keine Feuchtigkeit aufnehmen, bzw. abgeben (fehlende Feuchtigkeitsabsorption). Wenn Feuchtigkeit durch den Dichtstoff abgegeben und in den Scheibenzwischenraum abgegeben wird, bildet sich darin Kondensat, was zum "Erblinden" der Scheibe führt.

Der Dichtstoff muss zumindest etwas duktil bzw. elastisch sein, um durch Temperaturschwankungen induzierte Spannungen auszugleichen (Duktilität). Glas und Rahmen haben möglicherweise unterschiedliche Temperaturausdehnungskoeffizienten, was zu mechanischen Spannungen führen kann. Der Dichtstoff muss in der Lage sein diese Spannungen auszugleichen, ohne dass die Haftung mit den Materialien verloren geht.

Der Dichtstoff muss alle genannten Eigenschaften unter allen denkbaren klimatischen Bedingungen aufweisen (Beständigkeit).

Der Dichtstoff muss alle genannten Eigenschaften über den Zeitraum von Jahren, besser sogar Jahrzehnten beibehalten (Haltbarkeit).

Schließlich wird bevorzugt, dass der Dichtstoff möglichst mechanisch stabil und zäh ist und insbesondere eine hohe Shore Härte (über 70) aufweist (Festigkeit), um Einbruchsfestigkeit zu gewährleisten, wenn es sich bei dem Dichtstoff um eine Isolierglasversiegelung handelt. Typischer Weise wird im Falle eines Einbruchs die Isolierglasversiegelung durchstochen, um so den Kontakt zum Glas zu lösen und selbiges heraus zu hebeln. Dies soll durch erhöhte Festigkeit verhindert werden.

Aufgabe der Erfindung ist es, einen Dichtstoff zur Verfügung zu stellen, der erhöhte Haftfähigkeit und erhöhte Undurchlässigkeit aufweist, keine Feuchtigkeit absorbiert, duktil, beständig und haltbar ist und gleichzeitig möglichst hohe Festigkeit aufweist.

Die erfindungsgemäße Aufgabe wird durch den Dichtstoff der Erfindung gelöst, der durch Umsetzung eines epoxidierten Polysulfids mit einem Isocyanat hergestellt wird.

DE 103 20 543 A1 betrifft ein Verfahren zur Herstellung von Präpolymeren auf der Basis von Polysulfiden und Polyepoxiden. Es wird ein Verfahren zur Herstellung von Präpolymeren durch Umsetzung von Polysulfiden mit Polyepoxiden beschrieben, indem man Polyepoxide mit Polysulfiden, die mindestens zwei Mercaptogruppen aufweisen, in Gegenwart von quaternären Ammoniumverbindungen als Katalysator umsetzt. Das Verfahren erlaubt eine sehr schnelle quantitative Umsetzung und führt zu sehr einheitlichen Produkten, was die Funktionalität und den Anteil der Funktion pro Gewichtseinheit betrifft. Die so hergestellten Produkte sind viskositätsstabil und lagerfähig und lassen sich hervorragend reproduzierbar härten oder zu Produkten mit definiertem Eigenschaftsprofil weiter verarbeiten.

DE 102 11 295 C1 betrifft ein Verfahren zur Herstellung von epoxidierten Polysulfiden. Es wird ein Verfahren zur Herstellung von Epoxyendgruppen aufweisenden polymeren Polysulfiden beschrieben, das darin besteht, das man Polysulfide, die Thiolendgruppen aufweisen, mit einem Überschuss Epichlorhydrin und Alkalilauge reagieren lässt, Wasser azeotrop mit Epichlorhydrin abdestilliert, die epichlorhydrinhaltige epoxidierte Polysulfidlösung vom ausgeschiedenen Salz trennt, das Epichlorhydrin abdestilliert und den Rückstand ggf. mittels Dünnschichtdestillation reinigt. Das Reaktionsprodukt ist besonders geeignet zur Herstellung von hochwertigen Dichtstoffen, Klebstoffen und Überzügen. Das Produkt weist einen sehr hohen Reinheitsgrad auf, der Chlorgehalt ist äußerst niedrig. Das Verfahren arbeitet ohne zusätzliche organische Lösungsmittel und ist sehr umweltfreundlich.

DE 102 23 283 T1 betrifft ebenfalls ein Verfahren zur Herstellung von epoxidierten Polysulfiden. Es wird ein Verfahren zur Herstellung von Epoxyendgruppen aufweisenden polymeren Polysulfiden durch Umsetzung von Thiolendgruppen aufweisenden Polysulfiden mit Epichlorhydrin in Gegenwart von wässriger Alkalilauge beschrieben, bei dem man das Thiolendgruppen aufweisende Polysulfid gegebenenfalls zusammen mit wässriger Natronlauge in eine Vorlage von Epichlorhydrin und gegebenenfalls wässriger Alkalilauge dosiert und das Reaktionsgemisch aufarbeitet. Das Verfahren arbeitet wie ein einstufiges Verfahren und weist erhebliche verfahrenstechnische Vorteile auf wie Einsparungen bei der Mess- und Regeltechnik und Energieeinsparung. Es arbeitet darüber hinaus weitgehend risikofrei und sehr umweltfreundlich und führt deshalb zu reinen Produkten.

EP 1 507 817 offenbart ein Verfahren zur Herstellung von Epoxyendgruppen aufweisenden polymeren Polysulfiden durch Umsetzung von Thiolendgruppen aufweisenden Polysulfiden mit Epichlorhydrin in Gegenwart von wässriger Alkalilauge, bei dem man das Thiolendgruppen aufweisende Polysulfid gegebenenfalls zusammen mit wässriger Natronlauge in eine Vorlage von Epichlorhydrin und gegebenenfalls wässriger Alkalilauge dosiert und das Reaktionsgemisch aufarbeitet. Das Verfahren arbeitet wie ein einstufiges Verfahren und weist erhebliche verfahrenstechnische Vorteile auf, wie Einsparungen bei der Mess- und Regeltechnik und Energieeinsparungen. Es arbeitet darüber hinaus weitgehend risikofrei und ist sehr umweltfreundlich und führt deshalb zu reinen Produkten.

US 5,610,243 offenbart ein thermoplastisches Elastomer, das durch Umsetzung eines Epoxidharzes mit einem flüssigen mercapto-terminierten Polysulfid hergestellt wird, worin das Verhältnis der Epoxyäquivalente im Epoxidharz zu den Mercaptoäquivalenten von etwa 0,6 bis etwa 0,98 beträgt, unter der Voraussetzung, dass wenn das Verhältnis größer als etwa 0,95 : 1 ist, das Polysulfid weiter umgesetzt wird mit einer Menge einer Mono-Epoxyverbindung, ausreichend um das Verhältnis der gesamt Epoxyäquivalente zu den Mercaptoäquivalente auf ein Maximum von 1 : 1 zu erhöhen. Ein Elastomer mit verbleibenden - SH-Gruppen ist an Luft aushärtbar. Das Elastomer ist als Schmelzklebstoffdichtung für isolierende Fenstereinheiten geeignet.

### Kurze Beschreibung der Erfindung

Die Erfindung betrifft eine Zusammensetzung herstellbar durch die Umsetzung
a) einer Komponente A, umfassend ein epoxidiertes Polysulfid mit
b) einer Komponente B, umfassend ein Isocyanat.

Das epoxidierte Polysulfid kann durch die Formel

R₂-R₁-R₂

dargestellt werden, in der
R₁ ausgewählt ist aus der Gruppe, bestehend aus
-S-(X-O-Y-O-X-SS)ₙ-X-O-Y-O-X-S-,
in der X -(CH₂)ₐ- mit a = 1 - 4 ist, Y -(CH₂)_{b}- mit b = 1 - 4 ist und n = 1 - 40 ist, und -(S-X-O-Y-O-X-S)_{q}-(S-U-CH(SH)-V-S)ᵣ-,
in der X -(CH₂)ₐ- mit a = 1 - 4 ist, Y -(CH₂)_{b}- mit b = 1 - 4 ist, U -(CH₂)_{c}- mit c = 1 - 4 ist, V -(CH₂)_{d}- mit d = 1 - 4 ist und q = 4 - 30 und r = 0 - 3 ist,
und
R₂ ausgewählt ist aus der Gruppe, bestehend aus
A-[CH₂]ₑ-,
A-[CH₂]_{f}-B-,
A-[CH₂CH₂O]_{g}-B-,
A-[CH₂CHCH₃O]ₕ-B-,
A-[CH₂CH₂CH₂CH₂O]ᵢ-B-,
A-CH₂CHACH₂-B-,
A-CH₂CA₂CH₂-B-,
A-C₆H₈CH₂C₆H₈-B-,
A-C₆H₄CH₂C₆H₄-B-,
A-C₆H₄C(CH₃)₂C₆H₄-B- und 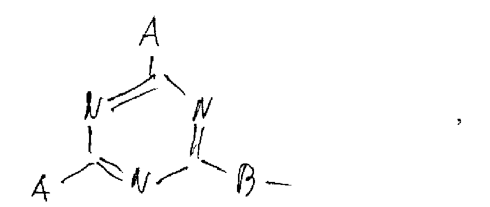 wobei A H₂COCH-(CH₂O)ⱼ- und B -(OCH₂)ⱼ-CH(OH)CH₂- mit j = 0, 1 ist und e = 1 - 4, f = 2 - 10, g = 1 - 50, h = 1 - 50, i = 1 - 50 ist.
n kann zwischen 8 - 30 sein, und ist bevorzugter Weise zwischen 12 - 16. a ist bevorzugter Weise 2 und b ist bevorzugter Weise 1.

Das Isocyanat kann ein Diisocyanat sein, ausgewählt aus der Gruppe, bestehend aus Toluoldiisocyanat (TDI), 4,4'-Methylendl(phenylisocyanat) (MDI), voll hydriertes MDI 4,4'-Methylendi(phenyüsocyanat) (H₁₂MDI), Hexamethylendiisocyanat (HDI) oder Isophorondiisocyanat (IPDI).

Die Komponente A enthält das epoxidiertes Polysulfid z.B. in einer Menge von 5 - 50 Gew.%, stärker bevorzugt von 10 - 30 Gew.%, am stärksten bevorzugt von 17 - 26 Gew. %, bezogen auf das Gesamtgewicht der Komponente A.

Die Komponente B enthält das z.B. Isocyanat in einer Menge von 20 - 70 Gew.%, stärker bevorzugt von 35 - 65 Gew.%, am stärksten bevorzugt von 49 - 55 Gew. % bezogen auf das Gesamtgewicht der Komponente B.

Die Zusammensetzung kann eine thixotrope Eigenschaften verleihende Substanz enthalten.

Die Zusammensetzung ist z.B. herstellbar durch eine Komponente A, enthaltend:
6,0 - 10,0 Gew.% Lupranol 3300
42,0 - 46,0 Gew.% Rizinusöl
0,5 - 1,5 Gew.% 2-Ethyl-1,3-Hexandiol
1,0 - 3,0 Gew.% Sylosiv A 300
14,0 - 18,0 Gew.% CaCO₃ gecoated mit 3 Gew.% Ca-Stearat
1,0 - 3,0 Gew.% Kieselsäure
0,5 - 1,5 Gew.% Laromin 60 (BASF)
3,0 - 5,0 Gew.% CaCO₃
0,1 - 1 Gew.% Soja Lecithin
0,1 - 1,5 Gew.% Härter DT
0,1 - 1,5 Gew.% Propylencarbonat
18,0 - 26,0 Gew.% epoxidiertes Polysulfid
und einer Komponente B, enthaltend:
33,0 - 37,0 Gew.% Desmodur VK-10 L (Bayer)
15,0-19,0 Gew.% Desmodur E21 (Bayer)
1,0-3,0 Gew.% Zusatzmittel TI (Bayer)
24,0 - 28,0 Gew.% Millicarb (CaCO₃)
3,0 - 7,0 Gew.% Titandioxid Kronos 1001 (Titanges.)
13,0 - 17,0 Gew.% CaCO₃ gecoated mit 3 Gew.% Ca-Stearat,
wobei die Gew.%-Angabe an Ca-Stearat auf das Gewicht an gecoatetem CaCO₃ bezogen ist und alle übrigen Gew.%-Angaben auf das Gesamtgewicht der jeweiligen Komponenten A oder B.

Außerdem betrifft die Erfindung die Verwendung der erfindungsgemäßen Zusammensetzung, als Dichtstoff zur Versiegelung eines Zwischenraums zwischen zwei Materialien. Das erste Material kann hierbei Glas sein und das zweite Material kann ausgewählt sein aus der Gruppe, bestehend aus Metall, Holz und Kunststoff. Die erfindungsgemäße Zusammensetzung kann zur Isolierglasversiegelung verwendet werden.

Außerdem betrifft die Erfindung ein Verfahren umfassend die folgenden Schritte:
a) Bereitstellen einer Komponente A, umfassend ein epoxidiertes Polysulfid,
b) Bereitstellen einer Komponente B, umfassend ein Isocyanat und
c) Vermischen der Komponenten A und B.

### Detaillierte Beschreibung der Erfindung

Der erfindungsgemäße Dichtstoff kann als Isolierglasversiegelung (Isolierglasdichtstoff) bei der Herstellung von Mehrfachglasfenstern und Türen verwendet werden. Wegen seiner Haftfähigkeit kann er auch als Klebstoff, Zweikomponentenkleber oder Zweikomponentendichtstoff bezeichnet werden. Versiegeln wird hierbei synonym zu (Ab-)dichten, bzw. hermetisch Abschließen gebraucht.

Die Komponente A enthält ein epoxidiertes Polysulfid. Epoxidierte Polysulfide sowie deren Herstellung aus Polysulfiden und Epoxiden wie Epichlorhydrin werden z.B. in DE 103 20 543 A1, DE 102 23 283 C1 und DE 102 11 295 C1 beschrieben.

Unter einem epoxidierten Polysulfid versteht man allgemein eine Verbindung, wie sie durch die Formel

R₂-R₁-R₂

dargestellt wird.

R₁ ist hierbei ein Polysulfid.

R₁ kann z.B. -S-(X-O-Y-O-X-SS)ₙ-X-O-Y-O-X-S- sein, wobei X -(CH₂)ₐ- mit a = 1 - 4 ist und Y -(CH₂)_{b}- mit b = 1 - 4 ist und n = 1 - 40 ist.
Besonders bevorzugt ist, dass a = 2 und b = 1 ist, n ist bevorzugter Weise 2 - 30, am stärksten bevorzugt 8-20.

R₁ kann auch -(S-X-O-Y-O-X-S)_{q}-(S-U-CH(SH)-V-S)ᵣ- sein, wobei X -(CH₂)ₐ- mit a = 1 - 4 ist, Y -(CH₂)_{b}- mit b = 1 - 4 ist, U -(CH₂)_{c}- mit c = 1 - 4 ist, V -(CH₂)_{d}- mit d = 1 - 4 ist und q = 4 - 30 und r = 0 - 3 ist. Besonders bevorzugt ist, dass a = 2, b = 1, c = 1 und d = 1 ist. Weiterhin bevorzugt ist, dass q = 10 - 20 und r = 1, 2 ist.

R₂ kann ausgewählt sein, aus der Gruppe bestehend aus einer der folgenden Gruppen,

A-[CH₂]ₑ- (aliphatisches epoxidiertes Polysulfid)

mit e = 1 - 4 sein, bevorzugter Weise ist e = 1,

A-[CH₂]_{f}-B- (aliphatisches epoxidiertes Polysulfid)

mit f = 2 - 10, besonders bevorzugt ist f = 6 - 8,

A-[CH₂CH₂O]_{g}-B-

mit g = 1 - 50, besonders bevorzugt ist g = 6 - 8,

A-[CH₂CHCH₃O]ₕ-B-

mit h = 1 - 50, besonders bevorzugt ist h = 6 - 8,

A-[CH₂CH₂CH₂CH₂O]ᵢ-B-

mit i = 1 - 50, besonders bevorzugt ist i = 6 - 8,

A-CH₂CHACH₂-B- (aromatisches epoxidiertes Polysulfid),

A-CH₂CA₂CH₂-B- (aromatisches epoxidiertes Polysulfid),

A-C₆H₈CH₂C₆H₈-B- (aromatisches epoxidiertes Polysulfid),

A-C₆H₄CH₂C₆H₄-B- (aromatisches epoxidiertes Polysulfid),

A-C₆H₄C(CH₃)₂C₆H₄-B- (aromatisches epoxidiertes Polysulfid), und

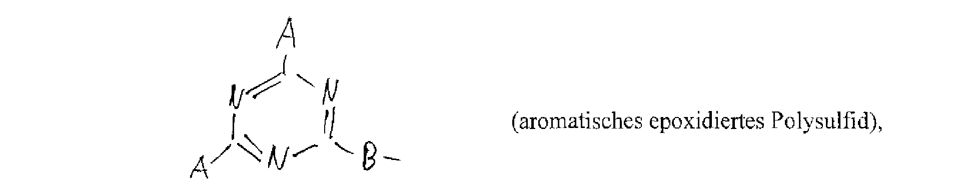

wobei A H₂COCH-(CH₂O)ⱼ- und B -(OCH₂)ⱼ-CH(OH)CH₂- mit j = 0, 1 ist.

Es können auch Gemische der vorstehend aufgeführten Epoxide oder auch unmodifizierte Epoxidharze und Novolacke wie Epilox (R) (Leuna-Harze), Bakelite-Epoxide wie Rütapox eingesetzt werden. Auch Araldite-Harz ist geeignet.

Epilox-Harze (Leuna-Harze) werden z.B. von der Firma Leuna-Harz GmbH, D-06237 Leuna, Bakelite-Epoxide wie Rütapox(R)-Harze von der Firma Bakelite AG, D-47125 Duisburg und Araldite-Harze von der Firma Vantico CH-4002 Basel, vertrieben.

Das epoxidierte Polysulfid (auch als EPS oder als Epoxy terminiertes Polysulfid bezeichnet) kann z.B. ein unter dem Handelsnamen Thioplast vertriebenes epoxidiertes Polysulfid sein, wie z.B. EPS 25, EPS 70 und EPS 350. Bei EPS 25 handelt es sich um ein aliphatisches epoxidiertes Polysulfid, während es sich bei EPS 70 und EPS 350 um aromatische epoxidierte Polysulfide handelt.

Die Komponente B enthält das Isocyanat. Hierbei kann es sich um ein Mono-, Di-, Tri- oder Polyisocyanat handeln. Bevorzugter Weise ist das Isocyanat ein MDI basiertes Polyisocyanat.

Auch bevorzugt ist, dass das Isocyanat ein Diisocyanat ist. Weiterhin bevorzugt ist das Diisocyanat ausgewählt aus der Gruppe, bestehend aus Diphenylmethan-diisocyanat, 4,4-Diphenylmethan-diisocyanat Toluoldiisocyanat (TDI), 4,4'-Methylendi(phenylisocyanat) (MDI), voll hydriertes MDI 4,4'-Methylendi(phenylisocyanat) (H₁₂MDI), Hexamethylendiisocyanat (HDI) oder Isophorondiisocyanat (IPDI).

Es wird bevorzugt, dass der fertige Dichtstoff thixotrope Eigenschaften aufweist. Unter einem thixotropen System wird eine Flüssigkeit verstanden, die bei mechanischer Belastung bzw. Scherbelastung ihre Viskosität erniedrigt. Der Vorteil des thixotropen Dichtstoffes ist, dass er durch die mechanische Belastung z.B. in einem Applikationsgerät seine Viskosität erniedrigt und sich somit leicht auftragen lässt. Nach dem Auftragen entfällt die mechanische Belastung durch das Applikationsgerät und die Viskosität des Dichtstoffes nimmt zu. Durch die erhöhte Viskosität verläuft der Klebstoff somit nicht unter dem Einfluss der Schwerkraft, sondern bleibt am Auftragungsort.

Angegeben wird Thixotropie als Differenz der Viskositäten im Ruhezustand und im bewegten Zustand. Der erfindungsgemäße Dichtstoff hat frisch vermischt im Ruhezustand vorzugsweise eine Viskosität von kleiner als 45 mPa (Viskosität nach Brookfield) und im bewegten Zustand bzw. unter Scherbelastung eine Viskosität von größer als 20.000 mPa (Viskosität nach Brookfield).

Um dies zu erreichen, wird entweder der Komponente A oder B eine thixotrope Eigenschaften verleihende Substanz zugefügt. Hierbei kann es sich z.B. um eine Substanz handeln ausgewählt aus der Gruppe, bestehend aus mit dem Salz einer C₁₂₋₂₀-Fettsäure, gecoatetem Metallcarbonat, perfluorierten Polyolefinen oder Derivaten dieser Polyolefine und Mischungen derselben. Bevorzugter Weise handelt es sich um ein mit einer C₁₂₋₂₀-Fettsäure gecoatetem Metallcarbonat, z.B. mit 3 Gew.-% Ca-Stearat gecoatetes CaCO₃, bezogen auf das Gesamtgewicht des CaCO₃. Unter "gecoatet" wird hier verstanden, dass die Oberfläche der Metallcarbonatkristallite beschichtet ist, so dass der Metallcarbonatkristallit ganz oder teilweise umhüllt ist.

Als Metallcarbonate können generell alle Carbonate gängiger, nicht giftiger Metalle verwendet werden. Bevorzugt sind jedoch Alkalimetall- oder Erdalkalimetallcarbonate. Das Alkalimetallcarbonat kann Li₂CO₃, Na₂CO₃ und K₂CO₃ sowie ein Gemisch dieser Alkalimetallcarbonate sein. Das Erdalkalimetallcarbonat ist ausgewählt aus der Gruppe, bestehend aus MgCO₃, CaCO₃, SrCO₃ und BaCO₃ sowie Mischungen dieser Erdalkalimetallcarbonate. Die bevorzugten Erdalkalimetalle sind jedoch MgCO₃ und CaCO₃. Das am stärksten bevorzugte Metallcarbonat ist CaCO₃

Die Fettsäure, mit deren Salz das Metallcarbonat beschichtet wird, ist eine C₁₂₋₂₀-Fettsäure. Bevorzugt ist ein Salz einer gesättigten Carbonsäure wie z. B. Pelargonsäure, Caprinsäure, Undecansäure, Laurinsäure, Tridecansäure, Tetradecansäure, Pentadecansäure, Palimitinsäure, Margarinsäure, Stearinsäure, Nonadecansäure Arachinsäure und Behensäure sowie Mischungen davon. Es können jedoch auch ungesättigte Fettsäuren wie Palmitoleinsäure, Ölsäure, Erucasäure, Sorbinsäure, Lindsäure, Linolensäure, Elaeosterinsäure, Arachidonsäure, Clupanodonsäure oder Docosahexaensäure verwendet werden. Ganz besonders bevorzugt ist Stearinsäure

Als Kation des Fettsäuresalzes ist ein Alkalimetall wie Li, Na oder K bevorzugt. Bevorzugter sind die Fettsäuresalze der Erdalkalimetalle wie Mg, Ca, Sr oder Ba. Besonders bevorzugt ist ein Ca-Fettsäuresalz, am meisten bevorzugt Ca-Stearat.

Die Menge an Coating, die auf das Carbonat aufgebracht wird, entspricht den üblicherweise bei gecoateten Metallcarbonaten verwendeten Mengen. Vorzugsweise beträgt sie jedoch 0,1 - 10 Gew.-%, stärker bevorzugt 2 - 4 Gew.-%, bezogen auf das Gesamtgewicht des gecoateten Metallcarbonats.

Die erfindungsgemäß die thixotrope Eigenschaften verleihende Substanz kann jedoch auch ein perfluoriertes Polyolefin sein. Die thixotropen Eigenschaften werden dann durch die Zugabe von Partikeln perfluorierter Polyolefine erhalten. Geeignete perfluorierte Polyolefine, die dem Klebstoffgemisch thixotrope Eigenschaften verleihen, sind dem Fachmann bekannt und können in der vorliegenden Erfindung verwendet werden. Besonders bevorzugt sind Partikel aus einem perfluorierten Polyolefin wie Polytetrafluorethylen, Polyhexafluorpropylen, Polyoctafluorbutylen und Polyhexafluorisobutylen, am meisten bevorzugt PTFE (Teflon®).

Die Menge an thixotrope Eigenschaften verleihender Substanz in der Gesamtzusammensetzung (Gemisch aus Komponente A und B) beträgt üblicherweise 5 - 40 Gew.%, vorzugsweise 10-30 Gew.%, bezogen auf das Gesamtgewicht der Zusammensetzung. Diese Anteile können auf die Komponente A und B aufgeteilt werden. In diesem Falle beträgt die Menge in Komponente A vorzugsweise 0 - 30 Gew.%, stärker bevorzugt 10 - 20 Gew.%, bezogen auf das Gesamtgewicht der Komponente A, und in Komponente B 0 - 30 Gew.%, stärker bevorzugt 15 - 25 Gew.% bezogen auf das Gesamtgewicht der Komponente B.

Dem erfindungsgemäßem Dichtstoff kann ein Härter zugefügt werden. Der Härter kann sowohl in der A Komponente als auch in der B Komponente enthalten sein. Es wird bevorzugt, dass der Härter ein Amin enthält. Es wird vermutet dass der Härter bei der Umsetzung der A und B Komponente als Katalysator wirkt und eine stärkere Vernetzung bewirkt. Bevorzugter Weise handelt es sich bei dem Härter um Härter DT (Bayer). Härter DT enthält Dimethyl - 4,4 - diamino-dicyclohexylmethan.

Der erfindungsgemäße Dichtstoff kann zusätzlich mindestens einen Hilfsstoff enthalten. Der Hilfsstoff kann ausgewählt sein aus der Gruppe, bestehend aus Füllstoffen wie Titandioxid, CaCO₃ insbesondere Champagnerkreide, Kieselsäure, Emulgatoren wie Soja Lecithin, Additiven, die die rheologischen Eigenschaften modifizieren wie pyrogene Kieselsäure, Weichmachern, Viskositätsverbesserer wie 1,6 Hexandioldiglycidyl-Ether, Fluidisiermitteln, Lösungsmitteln wie Alkohole, Ether, Ketone, Ester und niedere Parafine oder Öle, wie z.B. Rizinusöl, UV-Stabilisatoren, Farbstoffen, Pigmenten und Haftverbesserern sowie Mischungen davon. Diese werden in den üblichen Mengen verwendet.

Bevorzugter Weise haben die Komponenten A und B folgende Zusammensetzung:
Komponente A
   6,0 - 10,0 Gew.% Lupranol 3300
   42,0 - 46,0 Gew.% Rizinusöl
   0,5 - 1,5 Gew.% 2-Ethyl-1,3-Hexandiol
   1,0 - 3,0 Gew.% Sylosiv A 300
   14,0 - 18,0 Gew.% CaCO₃ gecoated mit 3 Gew.% Ca-Stearat
   1,0 - 3,0 Gew.% Kieselsäure
   0,5 - 1,5 Gew.% Laromin 60 (BASF) (Gemisch aus aliphatischen und, cycloaliphatischen Polyamin)
   3,0 - 5,0 Gew.% CaCO₃
   0,1 - 1 Gew.% Soja Lecithin
   0,1 - 1,5 Gew.% Härter DT (Bayer)
   0,1 - 1,5 Gew.% Propylencarbonat
   18,0 - 26,0 Gew.% epoxidiertes Polysulfid
Komponente B
   33,0 - 37,0 Gew.% Desmodur VK-10 L (Bayer)
   15,0 - 19,0 Gew.% Desmodur E21 (Bayer)
   1,0 - 3,0 Gew.% Zusatzmittel TI (Bayer)
   24,0 - 28,0 Gew.% Millicarb (CaCO₃)
   3,0 - 7,0 Gew.% Titandioxid Kronos 1001 (Titanges.)
   13,0 - 17,0 Gew.% CaCO₃ gecoated mit 3 Gew.% Ca-Stearat,
      wobei die Gew.%-Angabe an Ca-Stearat auf das Gewicht an gecoatetem CaCO₃ bezogen ist und alle übrigen Gew.%-Angaben auf das Gesamtgewicht der jeweiligen Komponenten A oder B.

Unter einer Umsetzung wird eine chemische Reaktion verstanden, hierbei kann es sich um eine Polymerisation oder Oligornerisation handeln. Die Reaktion muss nicht vollständig verlaufen, auch müssen nicht alle in den Komponenten A und B vorkommende Inhaltsstoffe an der Reaktion beteiligt sein. Die Reaktion wird bei einer Temperatur von 0 - 200°C durchgeführt, vorzugsweise 0 - 80°C am stärksten bevorzugt bei Raumtemperatur d.h. unter Raumbedingungen (d.h. SATP, entsprechend 100 kPa, und 25°C). Die Reaktion wird durch Vermischen beider Komponenten gestartet.

Generell dann der Dichtstoff der Erfindung zum Versiegeln, d.h. (Ab-)dichten des Zwischenraums zwischen zwei Materialien verwendet werden. Bevorzugter Weise handelt es sich bei dem ersten Material um Glas

Besonders bevorzugter Weise handelt es sich bei dem ersten Material um ein Fenster- oder Türenglas und bei dem zweiten Material um ein Rahmenmaterial des Fensters oder der Türe. Das Rahmenmaterial ist üblicherweise ein Material ausgewählt aus der Gruppe, bestehend aus Metall, Holz und Kunststoff.

Der erfindungsgemäße Dichtstoff weist hohe Haftfähigkeit und hohe Undurchlässigkeit auf und absorbiert keine Feuchtigkeit, ist duktil, beständig und haltbar. Gleichzeitig weist er hohe Festigkeit auf und wenn der Dichtstoff als Isolierglasversiegelung verwendet wird, ermöglicht er somit hohe Einbruchsfestigkeit.

Ein weiterer Vorteil des erfindungsgemäßen Dichtstoffes ist, dass beide Komponenten im Verhältnis 1:1 vermischt werden. Dies ermöglicht ein Auftragen mit einem einfachen Applikationsgerät, dass beide Komponenten z.B. aus zwei gleich großen Kartuschen, im Verhältnis 1:1 freisetzt. Weiterhin wird hierdurch eine gute Vermischung beider Komponenten ermöglicht.

### Beispiele

### Beispiel 1: Erfindungsgemäße Zusammensetzung eines Isolierglasdichtstoffs

Komponente A
   8,3 Gew.% Lupranol 3300
   43,5 Gew.% Rizinusöl 1. Presung (Ashland Süch.)
   1,3 Gew.% 2-Ethyl-1,3-Hexandiol (BASF)
   2,0 Gew.% Sylosiv A 300 (Grace)
   16,1 Gew.% Winnofil SPT (CaCO₃ gecoated mit 3 Gew.% Ca-Stearat)
   2,4 Gew.% Kieselsäure HDK S 13 (Wacker)
   0,8 Gew.% Laromin 60 (BASF)
   3,5 Gew.% Millicarb (CaCO₃)
   0,4 Gew.% Soja Lecithin konz. STA (Unimills)
   0,5 Gew.% Härter DT (Bayer)
   0,3 Gew.% Propylencarbonat (BASF, Bayer)
   18,0 Gew.% epoxidiertes Polysulfid EPS 350
   3,0 Gew.% epoxidiertes Polysulfid EPS 70
Komponente B
   34,9 Gew.% Desmodur VK-10 L (Bayer)
   17,4 Gew.% Desmodur E21 (Bayer)
   2,1 Gew.% Zusatzmittel TI (Bayer)
   26,0 Gew.% Millicarb (CaCO₃)
   5,0 Gew.% Titandioxid Kronos 1001 (Titanges.)
   14,6 Gew.% Winnofil SPT (CaCO₃ gecoatet)

Komponente A und Komponente B werden bei Raumtemperatur mit Hilfe einer 2-Kammer Side by Side Mischkartusche mit angebrachten Statikmischer und einer Standard-Auspresspistole in den Zwischenraum zwischen Fensteramen und Glasscheibe aufgetragen. Es wird hierbei kein Haftvermittler verwendet.

### Demonstration der Einbruchsfestigkeit

Die Einbruchsfestigkeit bzw. Einruchhemmung von Fenstern und Türen wird durch DIN V ENV 1627 normiert. Diese europäische Vornorm ersetzt die bis dato gebräuchliche deutschen Normen DIN V 18054, sowie die E DIN 18103. Die Einbruchsfestigkeit wird in die Widerstandsklassen WK 1 - WK 6 eingeteilt.

**Mutmaßliche Arbeitsweise des Täters nach DIN V ENV 1627**

| Bauteil Widerstandsklasse DIN V ENV 1627 | |
|---|---|
| **WK 1** | Der Gelegenheitstäter versucht das Fenster, die Türe oder den Abschluss durch den Einsatz körperlicher Gewalt aufzubrechen, z.B. Gegentreten, Schulterwurf, Hochschieben, Herausreißen |
| **WK 2** | Der Gelegenheitstäter versucht das Fenster, die Türe oder den Abschluss zusätzlich mit einfachen Werkzeugen wie z.B. Schraubendreher, Zange und Keile, aufzubrechen. |
| **WK 3** | Der Täter versucht mit einem zusätzlichen Schraubendreher und einem Kuhfuß Zutritt zu erlangen. |
| **WK 4** | Der erfahrene Täter setzt zusätzlich Elektrowerkzeuge z.B. Sägen, Hammer, Schlagaxt, Stemmeisen und Meißel, sowie eine Akku-Bohrmaschine ein. |
| **WK 5** | Der erfahrene Täter setzt zusätzlich Elektrowerkzeuge z.B. Bohrmaschine, Stich- oder Säbelsäge und Winkelschleifer mit einem max. Scheibendurchmesser von 125 mm ein. |
| **WK 6** | Der erfahrene Täter setzt zusätzlich Elektrowerkzeuge z.B. Bohrmaschine, Stich- oder Säbelsäge und Winkelschleifer mit einem max. Scheibendurchmesser von 230 mm ein. |

Ein Test ergibt, dass mit dem Isolierglasdichtstoff nach Beispiel 1 an Fenstern und Türen eine Einsbruchssicherheit von WK 4 erreicht werden kann.

## Patentansprüche

1. Zusammensetzung herstellbar durch die Umsetzung
a) einer Komponente A, umfassend ein epoxidiertes Polysulfid mit
b) einer Komponente B, umfassend ein Isocyanat.

2. Zusarnmensetzung nach Anspruch 1, wobei das epoxidierte Polysulfid durch die Formel
R₂-R₁-R₂
dargestellt wird, in der
R₁ ausgewählt ist aus der Gruppe, bestehend aus
-S-(X-O-Y-O-X-SS)ₙ-X-O-Y-O-X-S-,
in der X -(CH₂)ₐ- mit a = 1 - 4 ist, Y -(CH₂)_{b}- mit b = 1 - 4 ist und n = 1 - 40 ist, und
-(S-X-O-Y-O-X-S)_{q}-(S-U-CH(SH)-V-S)ᵣ-,
in der X -(CH₂)ₐ- mit a = 1 - 4 ist, Y -(CH₂)_{b}- mit b = 1 - 4 ist, U -(CH₂)_{c}- mit c = 1 - 4 ist, V-(CH₂)_{d}-mit d= 1-4 ist und q = 4 - 30 und r = 0 - 3 ist,
und
R₂ ausgewählt ist aus der Gruppe, bestehend aus
A-[CH₂]ₑ-,
A-[CH₂]_{f}-B-,
A-[CH₂CH₂O]_{g}-B-,
A-[CH₂CHCH₃O]ₕ-B-,
A-[CH₂CH₂CH₂CH₂O]ᵢ-B-,
A-CH₂CHACH₂-B-,
A-CH₂CA₂CH₂-B-,
A-C₆H₈CH₂C₆H₈-B-,
A-C₆H₄CH₂C₆H₄-B-,
A-C₆H₄C(CH₃)₂C₆H₄-B- und 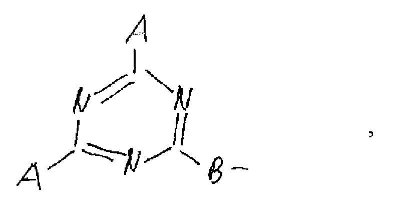 wobei A H₂COCH-(CH₂O)ⱼ- und B -(OCH₂)ⱼ-CH(OH)CH₂- mit j = 0, 1 ist und e = 1 - 4, f = 2 - 10, g = 1 - 50, h = 1 - 50, i = 1 - 50 ist.

3. Zusammensetzung nach Anspruch 2, wobei n = 8 - 30, bevorzugt 12 - 16 ist, a = 2 und b = 1 ist.

4. Zusammensetzung nach Anspruch 1, wobei das Isocyanat ein Diisocyanat ist, ausgewählt aus der Gruppe, bestehend aus Toluoldiisocyanat (TDI), 4,4'-Methylendi(phenylisocyanat) (MDI), voll hydriertes MDI 4,4'-Methylendi(phenylisocyanat) (H₁₂MDI), Hexamethylendiisocyanat (HDI) oder Isophorondiisocyanat (IPDI).

5. Zusammensetzung nach Anspruch 1, wobei Komponente A das epoxidiertes Polysulfid in einer Menge von 5 - 50 Gew.%, stärker bevorzugt von 10 - 30 Gew.%, am stärksten bevorzugt von 17 - 26 Gew. %, bezogen auf das Gesamtgewicht der Komponente A, enthält.

6. Zusammensetzung nach Anspruch 1, wobei Komponente B das Isocyanat in einer Menge von 20 - 70 Gew.%, stärker bevorzugt von 35 - 65 Gew.%, am stärksten bevorzugt von 49 - 55 Gew. % bezogen auf das Gesamtgewicht der Komponente B enthält.

7. Zusammensetzung nach Anspruch 1, des Weiteren enthaltend eine thixotrope Eigenschaften verleihende Zusammensetzung.

8. Zusammensetzung nach Anspruch 1, mit einer Komponente A, enthaltend:
6,0 - 10,0 Gew.% Lupranol 3300
42,0 - 46,0 Gew.% Rizinusöl
0,5 - 1,5 Gew.% 2-Ethyl-1,3-Hexandiol
1,0 - 3,0 Gew.% Sylosiv A 300
14,0 - 18,0 Gew.% CaCO₃ gecoated mit 3 Gew.% Ca-Stearat
1,0 - 3,0 Gew.% Kieselsäure
0,5 - 1,5 Gew.% Laromin 60 (BASF)
3,0 - 5,0 Gew.% CaCO3
0,1 - 1 Gew.% Soja Lecithin
0,1 - 1,5 Gew.% Härter DT
0,1 - 1,5 Gew.% Propylencarbonat
18,0 - 26,0 Gew.% epoxidiertes Polysulfid
und einer Komponente B, enthaltend:
33,0 - 37,0 Gew.% Desmodur VK-10 L (Bayer)
15,0 - 19,0 Gew.% Desmodur E21 (Bayer)
1,0 - 3,0 Gew.% Zusatzmittel TI (Bayer)
24,0 - 28,0 Gew.% Millicarb (CaCO₃)
3,0 - 7,0 Gew.% Titandioxid Kronos 1001 (Titanges.)
13,0 17,0 Gew.% CaCO₃ gecoated mit 3 Gew.% Ca-Stearat,
wobei die Gew.%-Angabe an Ca-Stearat auf das Gewicht an gecoatetem CaCO₃ bezogen ist und alle übrigen Gew.%-Angaben auf das Gesamtgewicht der jeweiligen Komponenten A oder B.

9. Verwendung der Zusammensetzung nach Anspruch 1, als Dichtstoff zur Versiegelung eines Zwischenraums zwischen zwei Materialien.

10. Verwendung nach Anspruch 9 wobei das erste Material Glas ist und das zweite Material ausgewählt aus der Gruppe, bestehend aus Metall, Holz und Kunststoff.

11. Verwendung nach Anspruch 10, zur Isolierglasversiegelung,

12. Verfahren umfassend die folgenden Schritte:
a) Bereitstellen einer Komponente A, umfassend ein epoxidiertes Polysulfid,
b) Bereitstellen einer Komponente B, umfassend ein Isocyanat und
c) Vermischen der Komponenten A und B.
